# FASCICULE DE BREVET EUROPEEN

(11) **EP 3 562 627 B1**
(45) Date de publication et mention de la délivrance du brevet: **03.02.2021**
(21) Numéro de dépôt: 17822715.3
(22) Date de dépôt: 28.12.2017
(51) Int. Cl.: B25J 9/00

(54) **DISPOSITIF DE LIAISON POUR STRUCTURE D'EXOSQUELETTE FACILITANT LE PORTAGE DE CHARGES PENDANT LA MARCHE OU LA COURSE**
VERBINDUNGSVORRICHTUNG FÜR EINE EXOSKELETTSTRUKTUR ZUR ERLEICHTERUNG DES TRAGENS VON LASTEN BEIM GEHEN ODER LAUFEN
LINKING DEVICE FOR AN EXOSKELETON STRUCTURE, FACILITATING THE CARRYING OF LOADS WHILE WALKING OR RUNNING

(30) Priorité: 29.12.2016 FR 1663512
(43) Date de publication de la demande: 06.11.2019
(73) Titulaire: Safran Electronics & Defense, 92100 Boulogne-Billancourt (FR); B-Temia Inc., St-Augustin-de-Desmaures, QC G3A 2J9 (CA)
(72) Inventeur: BILODEAU, Katia, St-Augustin-de-Desmaures, Quebec G3A 2J9 (CA); SOUCY, Francisco, St-Augustin-de-Desmaures, Quebec G3A 2J9 (CA); ZOSO, Nathaniel, St-Augustin-de-Desmaures, Quebec G3A 2J9 (CA); BAPTISTA, Jonathan, 92100 Boulogne-Billancourt (FR); GRENIER, Jordane, 92100 Boulogne-Billancourt (FR)
(74) Mandataire: Regimbeau
(86) Numéro de dépôt international: PCT/EP2017/084744
(87) Numéro de publication internationale: WO 2018/122332

(56) Documents cités:
- JP-A- 2015 163 180
- US-A1- 2006 260 620
- US-A1- 2016 317 340

## Description

### DOMAINE DE L'INVENTION

L'invention concerne un dispositif de liaison pour structure d'exosquelette, et une structure d'exosquelette comprenant un tel dispositif.

### ETAT DE LA TECHNIQUE

Dans le domaine militaire, les fantassins sont couramment équipés de sacs à dos, leur permettant de transporter du matériel. Lorsque les fantassins réalisent des missions prolongées, la masse du sac à dos peut atteindre 50 kilogrammes. La masse du sac à dos peut diminuer fortement la mobilité du fantassin et engendre une dépense métabolique plus importante.

De plus, le sac à dos repose généralement sur les épaules ou sur les hanches de l'utilisateur, ce qui peut générer des troubles musculo-squelettiques au niveau des épaules, des pressions cutanées, voire être à l'origine de symptômes neurologiques périphériques par compression nerveuse (fourmillements).

Les solutions actuelles consistent à répartir la masse du sac à dos à la fois sur les épaules à l'aide de bretelles et sur les hanches à l'aide d'une ceinture ventrale. Ces solutions ne permettent toutefois pas de soulager totalement l'utilisateur.

Les exosquelettes d'assistance à l'effort sont des structures mécaniques qui doublent la structure du squelette humain et qui permettent d'améliorer les capacités physiques du corps humain.

Certaines structures d'exosquelette ont été proposées qui permettent de faire reposer la masse du sac à dos sur le sol.

Cependant, les structures d'exosquelette connues (parfois qualifiées de « robots marcheurs ») génèrent un encombrement très significatif et réduisent la mobilité de l'utilisateur.

En particulier, dans ces structures d'exosquelette, la charge du sac à dos repose sur les parties inférieures de l'exosquelette, qui s'étendent le long des jambes de l'utilisateur jusqu'au sol. Cette charge a par conséquent tendance à s'opposer aux mouvements de pieds de l'utilisateur pendant la marche, en particulier, lorsque l'utilisateur décolle son pied du sol.

Le document US 2006/260620 A1 montre une structure d'exosquelette comprenant une ceinture lombaire, un premier et un deuxième ensemble mécanique de jambe, un ensemble mécanique de dos pour le portage d'une charge, ainsi qu'un ensemble de liaison de ces différents éléments. L'ensemble de liaison comprend un support fixé sur la ceinture lombaire, une première et une deuxième biellette montées chacune rotative par rapport audit support et présentant chacune une extrémité propre à être reliée à une articulation de hanche, ainsi qu'un premier et un deuxième ressort de transmission de force tendant à aider l'utilisateur à maintenir l'ensemble mécanique de dos vertical pendant la marche.

### RESUME DE L'INVENTION

Un but de l'invention est de proposer une solution pour permettre à un utilisateur d'être soulagé d'une partie importante de la masse de son sac à dos, sans pour autant réduire la mobilité du bas de son corps pendant la marche ou la course.

Ce but est atteint dans le cadre de la présente invention grâce à un dispositif de liaison pour structure d'exosquelette, comprenant :
- un support destiné à être fixé sur une ceinture lombaire,
- une pièce d'entrée montée rotative par rapport au support et propre à être reliée à un ensemble mécanique de dos de la structure d'exosquelette,
- un dispositif de transmission,
- une première biellette montée rotative par rapport au support, la première biellette présentant une première extrémité reliée à la pièce d'entrée par le biais du dispositif de transmission et une deuxième extrémité propre à être reliée à une première articulation de hanche d'un premier ensemble mécanique de jambe de la structure d'exosquelette, et
- une deuxième biellette montée rotative par rapport au support, la deuxième biellette présentant une première extrémité reliée à la pièce d'entrée par le biais du dispositif de transmission et une deuxième extrémité propre à être reliée à une deuxième articulation de hanche d'un deuxième ensemble mécanique de jambe de la structure d'exosquelette,
le dispositif de transmission étant agencé de sorte que :
- lorsqu'une charge est appliquée sur la pièce d'entrée tendant à faire pivoter la pièce d'entrée dans un premier sens de rotation par rapport au support, le dispositif de transmission transmet à la première biellette une force tendant à faire pivoter la première biellette autour de son axe pour transférer la charge vers le premier ensemble mécanique de jambe et décharger le deuxième ensemble mécanique de jambe de la structure d'exosquelette, et
- lorsqu'une charge est appliquée sur la pièce d'entrée tendant à faire pivoter la pièce d'entrée dans un deuxième sens de rotation par rapport au support, opposé au premier sens de rotation, le dispositif de transmission transmet à la deuxième biellette une force tendant à faire pivoter la deuxième biellette autour de son axe pour transférer la charge vers le deuxième ensemble mécanique de jambe et décharger le premier ensemble mécanique de jambe de la structure d'exosquelette.

Pendant le cycle de marche, les ensembles mécaniques de jambe de la structure d'exosquelette sont en contact avec le sol de manière alternée. Le dispositif de liaison proposé permet de transférer la charge générée par le poids du sac à dos vers l'ensemble mécanique de jambe en contact avec le sol et de soulager l'ensemble mécanique de jambe qui n'est pas en contact avec le sol.

Plus précisément, pour chaque ensemble mécanique de jambe :
- pendant la phase d'appui, qui correspond à une période où le pied est en contact avec le sol, la charge est transmise vers le sol par l'ensemble mécanique de jambe, et
- pendant la phase oscillante où le pied n'est plus en contact avec le sol, l'ensemble mécanique de jambe est libre de toute charge générée par le sac à dos, de sorte que le pied oscillant est libre de son mouvement.

Par ailleurs, lorsque l'utilisateur se tient debout immobile, les ensembles mécaniques de jambe de la structure d'exosquelette sont simultanément en contact avec le sol. Le dispositif de liaison proposé permet de partager la charge générée par le poids du sac à dos en la répartissant sur les deux ensembles mécaniques de jambe.

Le dispositif de liaison peut en outre présenter les caractéristiques suivantes :
- la pièce d'entrée est montée coulissante par rapport au support,
- la pièce d'entrée est montée coulissante par rapport au support par le biais d'une glissière et d'un pion cylindrique propre à coulisser à l'intérieur de la glissière et à tourner par rapport à la glissière,
- la pièce d'entrée présente une première branche ayant une extrémité reliée à la première biellette par le biais du dispositif de transmission et une deuxième branche ayant une extrémité reliée à la deuxième biellette par le biais du dispositif de transmission,
- le dispositif de transmission est un dispositif à poulies et câbles,
- le dispositif de transmission comprend un premier câble reliant la pièce d'entrée à la première extrémité de la première biellette, et un deuxième câble reliant la pièce d'entrée à la première extrémité de la deuxième biellette,
- le dispositif comprend une première poulie montée à rotation sur le support, et dans lequel le premier câble relie la pièce d'entrée à la première extrémité de la première biellette en prenant appui sur une surface circonférentielle de la première poulie,
- le dispositif comprend une deuxième poulie montée à rotation sur le support, et dans lequel le deuxième câble relie la pièce d'entrée à la première extrémité de la deuxième biellette en prenant appui sur une surface circonférentielle de la deuxième poulie,
- la première poulie et la deuxième poulie ont leurs axes de rotation confondus,
- le dispositif de transmission comprend une première poulie montée à rotation sur le support, un premier câble reliant la pièce d'entrée à la première poulie, et un troisième câble reliant la première poulie à la première extrémité de la première biellette,
- le premier câble prend appui sur une première surface circonférentielle de la première poulie et le troisième câble prend appui sur une troisième surface circonférentielle de la première poulie, la troisième surface circonférentielle présent un rayon inférieur au rayon de la première surface circonférentielle,
- le dispositif de transmission comprend une deuxième poulie montée à rotation sur le support, un deuxième câble reliant la pièce d'entrée à la deuxième poulie, et un quatrième câble reliant la deuxième poulie à la première extrémité de la deuxième biellette,
- le deuxième câble prend appui sur une deuxième surface circonférentielle de la deuxième poulie et le quatrième câble prend appui sur une quatrième surface circonférentielle de la deuxième poulie, la quatrième surface circonférentielle présent un rayon inférieur au rayon de la deuxième surface circonférentielle,
- la première poulie et/ou la deuxième poulie a un axe de rotation confondu avec l'axe de rotation de la première biellette et/ou de la deuxième biellette.

L'invention concerne en outre une structure d'exosquelette comprenant :
- une ceinture lombaire propre à entourer la taille d'un utilisateur,
- un premier ensemble mécanique de jambe propre à s'étendre le long d'une première jambe de l'utilisateur,
- un deuxième ensemble mécanique de jambe propre à s'étendre le long d'une deuxième jambe de l'utilisateur,
- un ensemble mécanique de dos propre à s'étendre le long du dos de l'utilisateur pour le portage d'une charge,
- un dispositif de liaison tel que défini précédemment, dont la pièce d'entrée est reliée à la structure de dos, le support est fixé à la ceinture lombaire, la première biellette a sa deuxième extrémité reliée au premier ensemble mécanique de jambe via une première articulation de hanche et la deuxième biellette a sa deuxième extrémité reliée au deuxième ensemble mécanique de jambe via une deuxième articulation de hanche.

### PRESENTATION DES DESSINS

D'autres caractéristiques et avantage ressortiront encore de la description qui suit, laquelle est purement illustrative et non limitative, et doit être lue en regard des figures annexées, parmi lesquelles :
- la figure 1 représente de manière schématique, en vue de face, une structure d'exosquelette conforme à un mode de réalisation de l'invention,
- la figure 2 représente de manière schématique, en vue de côté, la structure d'exosquelette de la figure 1,
- les figures 3 et 4 représentent de manière schématique un dispositif de liaison conforme à un premier mode de réalisation de l'invention,
- la figure 5 est un schéma de principe illustrant le fonctionnement du dispositif de liaison des figures 3 et 4,
- la figure 6 représente de manière schématique un dispositif de liaison conforme à un deuxième mode de réalisation de l'invention.

### DESCRIPTION DETAILLEE D'UN MODE DE REALISATION

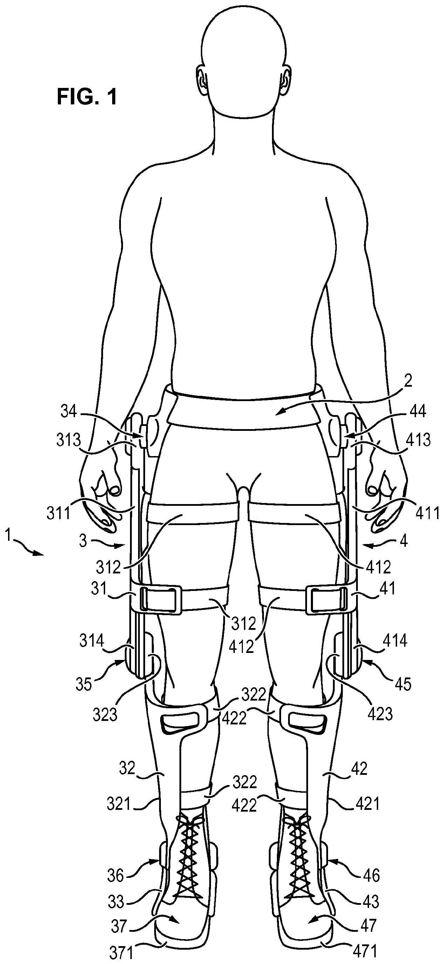

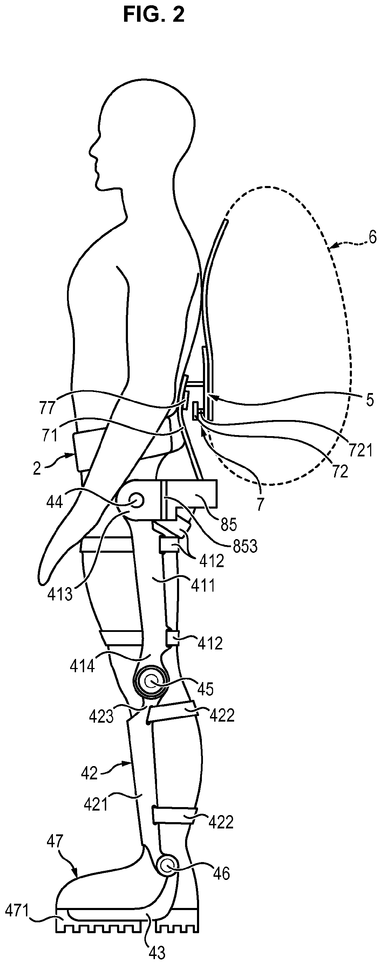

Sur les figures 1 et 2, la structure d'exosquelette 1 représentée comprend une ceinture lombaire 2, un premier ensemble mécanique de jambe 3, un deuxième ensemble mécanique de jambe 4, et un ensemble mécanique de dos 5.

La ceinture lombaire 2 est propre à entourer la taille d'un utilisateur. La ceinture lombaire 2 est disposée autour de la taille de l'utilisateur, en appui sur les hanches de l'utilisateur. La ceinture lombaire peut supporter une batterie permettant d'alimenter les différents actionneurs de la structure d'exosquelette en énergie électrique, et une unité de commande programmée pour commander les différents actionneurs. La batterie et l'unité de commande sont fixées à la ceinture lombaire.

Le premier ensemble mécanique de jambe 3 s'étend le long d'un premier membre inférieur (jambe droite) de l'utilisateur. Le premier ensemble mécanique de jambe 3 est propre à être attaché au premier membre inférieur pour assister le mouvement du premier membre inférieur lors de la marche ou de la course.

Le deuxième ensemble mécanique de jambe 4 s'étend le long d'un deuxième membre inférieur (jambe gauche) de l'utilisateur. Le deuxième ensemble mécanique de jambe 4 est propre à être attaché au deuxième membre inférieur pour assister le mouvement du deuxième membre inférieur lors de la marche ou de la course.

On notera que le premier ensemble mécanique de jambe 3 et le deuxième ensemble mécanique de jambe 4 sont symétriques l'un de l'autre. Ces ensembles 3 et 4 comprennent donc des parties identiques ou similaires.

Le premier ensemble mécanique 3 comprend une première pièce fémorale 31, une première pièce tibiale 32, et une première pièce de pied 33.

La première pièce fémorale 31 comprend un premier segment fémoral 311 prévu pour s'étendre le long d'une première cuisse (cuisse droite) de l'utilisateur et des sangles de fixation 312 propres à entourer la première cuisse de l'utilisateur pour fixer le segment fémoral 311 à la première cuisse.

La première pièce tibiale 32 comprend un premier segment tibial 321 prévu pour s'étendre le long d'un premier mollet (mollet droit) de l'utilisateur et des sangles de fixation 322 propres à entourer le premier mollet de l'utilisateur pour fixer le segment tibial 321 au premier mollet.

La première pièce de pied 33 est fixée à une première chaussure 35 de l'utilisateur, par exemple à une semelle 351 de la chaussure 37. La première pièce de pied 33 peut être fixée à la semelle 371 au moyen de vis.

Le premier segment fémoral 311 comprend une première extrémité 313 raccordée à la ceinture lombaire 2 par le biais d'une première articulation de hanche 34 et une deuxième extrémité 314 raccordée au premier segment tibial 321 par le biais d'une première articulation de genou 35.

Le premier segment tibial 321 comprend une première extrémité 323 raccordée au premier segment fémoral 311 par la première articulation de genou 35 et une deuxième extrémité 324 raccordée à la première pièce de pied 33 par le biais d'une première articulation de cheville 36.

Le deuxième ensemble mécanique 4 est symétrique du premier ensemble mécanique 3.

Le deuxième ensemble mécanique 4 comprend également une deuxième pièce fémorale 41, une deuxième pièce tibiale 42 et une deuxième pièce de pied 43.

La deuxième pièce fémorale 41 comprend un deuxième segment fémoral 411 prévu pour s'étendre le long d'une deuxième cuisse (cuisse gauche) de l'utilisateur et des sangles de fixation 412 propres à entourer la deuxième cuisse de l'utilisateur pour fixer le segment fémoral 411 à la deuxième cuisse.

La deuxième pièce tibiale 42 comprend un deuxième segment tibial 421 prévu pour s'étendre le long d'un deuxième mollet (mollet gauche) de l'utilisateur et des sangles de fixation 422 propres à entourer le deuxième mollet de l'utilisateur pour fixer le segment tibial 421 au deuxième mollet.

La deuxième pièce de pied 43 est fixée à une deuxième chaussure 47 de l'utilisateur, par exemple à une semelle 471 de la chaussure 47. La deuxième pièce de pied 43 peut être fixée à la semelle 471 au moyen de vis.

Le deuxième segment fémoral 411 comprend une première extrémité 413 raccordée à la ceinture lombaire 2 par le biais d'une deuxième articulation de hanche 44 et une deuxième extrémité 414 raccordée au deuxième segment tibial 421 par le biais d'une deuxième articulation de genou 45.

Le deuxième segment tibial 421 comprend une première extrémité 423 raccordée au deuxième segment fémoral 411 par la deuxième articulation de genou 45 et une deuxième extrémité 424 raccordée à la deuxième pièce de pied 43 par le biais d'une deuxième articulation de cheville 46.

Les articulations de hanche 34, 44 et les articulations de genou 35, 45 peuvent comprendre des actionneurs permettant d'assister l'utilisateur lors d'un mouvement de flexion ou d'extension de la hanche ou du genou.

L'ensemble mécanique de dos 5 (visible sur la figure 2) est propre à s'étendre le long du dos de l'utilisateur pour le portage d'une charge 6, par exemple un sac à dos.

La structure d'exosquelette 1 comprend également un dispositif de liaison 7 permettant de relier l'ensemble mécanique de dos 5 à la ceinture lombaire 2 et aux ensembles mécaniques de jambe 3 et 4.

Lorsque la charge 6 est fixée à l'ensemble mécanique de dos 5, le poids de la charge 6 est transféré au sol, via la ceinture lombaire 2 et les ensembles mécaniques de jambe 3 et 4.

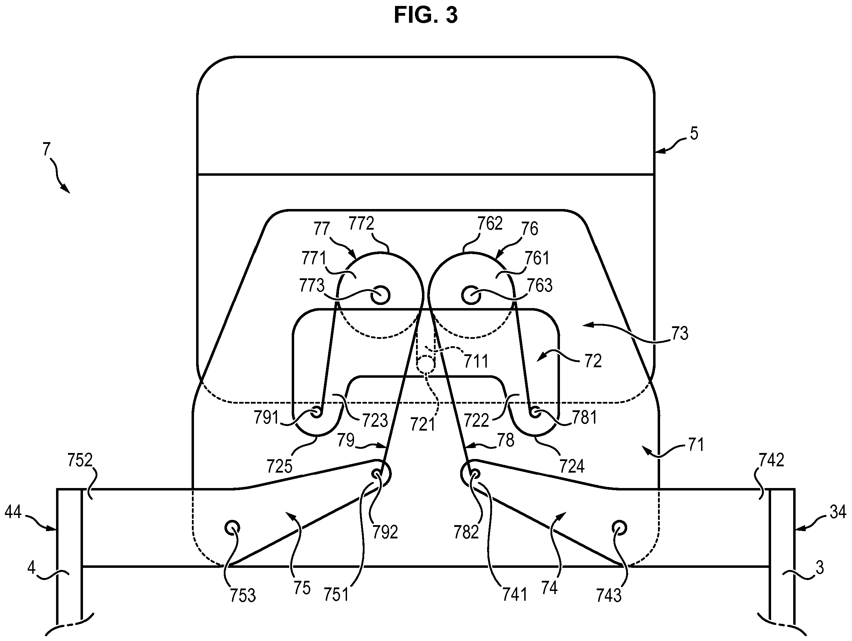

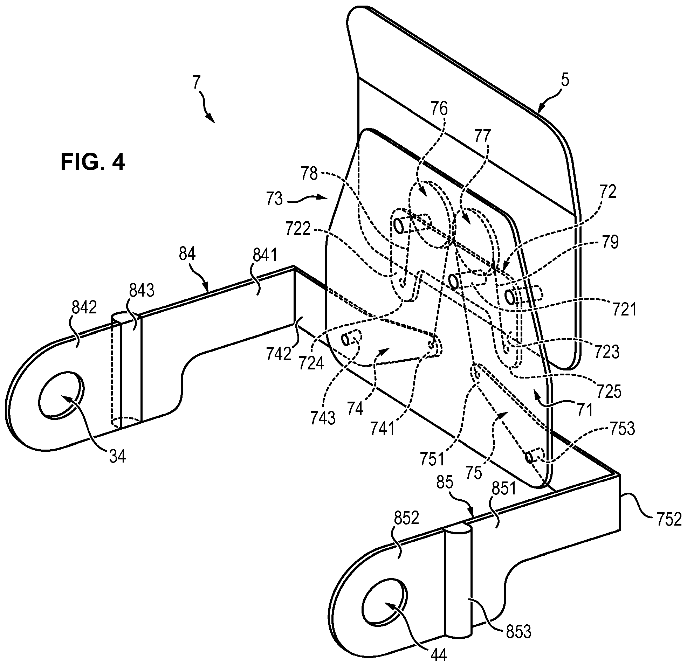

Les figures 3 et 4 représentent de manière schématique un dispositif de liaison 7 conforme à un premier mode de réalisation, reliant l'ensemble mécanique de dos 5 à la ceinture lombaire 2 et aux ensembles mécaniques de jambe 3 et 4.

Le dispositif de liaison 7 comprend un support 71, une pièce d'entrée 72, un dispositif de transmission 73, une première biellette 74 et une deuxième biellette 75.

Le support 71 est fixé sur la ceinture lombaire 2.

La pièce d'entrée 72 est reliée à l'ensemble mécanique de dos 5. La pièce d'entrée 72 est montée coulissante par rapport au support 71 par le biais d'une glissière 711 et d'un pion cylindrique 721 propre à coulisser à l'intérieur de la glissière 711 et à tourner par rapport à la glissière 711. Plus précisément, le pion 721 est monté fixe sur la pièce d'entrée 72 et la glissière 711 est montée fixe sur le support 71. Le pion 721 et la glissière 711 autorisent ainsi une translation de la pièce d'entrée 72 par rapport au support 71 selon une direction sensiblement verticale lorsque l'utilisateur se tient en position debout. Le pion 721 et la glissière 711 autorisent également une rotation de la pièce d'entrée 72 par rapport au support 71 selon un axe de rotation parallèle à l'axe sagittal de l'utilisateur.

La pièce d'entrée 72 présente une forme générale de U avec une première branche 722 et une deuxième branche 723. La première branche 722 présente une première extrémité 724 et la deuxième branche 723 présente une deuxième extrémité 725.

Le dispositif de transmission 73 comprend une première poulie 76, une deuxième poulie 77, un premier câble 78 et un deuxième câble 79.

La première poulie 76 est montée à rotation sur le support 71 autour d'un premier axe de rotation 763. La première poulie 76 comprend une première roue 761 ayant une première surface circonférentielle 762. La première surface circonférentielle 762 peut présenter une première gorge pour recevoir et guider le premier câble 78.

La deuxième poulie 77 est également montée à rotation sur le support 71 autour d'un deuxième axe de rotation 773. La deuxième poulie 77 comprend une deuxième roue 771 ayant une deuxième surface circonférentielle 772. La deuxième surface circonférentielle 772 peut présenter une deuxième gorge pour recevoir et guider le deuxième câble 79.

Les deux poulies 76 et 77 peuvent être disposées côte à côte en ayant des axes de rotations 763 et 773 distincts et parallèles, ou être disposées en étant superposées en ayant leurs axes de rotation 763 et 773 confondus.

La première biellette 74 est montée rotative sur le support 71. De préférence, la première biellette 74 est montée rotative autour d'un axe de rotation 743 confondu avec un axe d'adduction/abduction de la première articulation de hanche (articulation de hanche droite) de l'utilisateur. La première biellette 74 présente une première extrémité 741 reliée à la pièce d'entrée 72 par le biais du dispositif de transmission 73 et une deuxième extrémité 742 reliée à la première articulation de hanche 34 du premier ensemble mécanique de jambe 3.

La deuxième biellette 75 est montée rotative par rapport au support 71. De préférence, la deuxième biellette 75 est montée rotative autour d'un axe de rotation 753, parallèle à l'axe de rotation 743 de la première biellette 74, et confondu avec un axe d'adduction/abduction de la deuxième articulation de hanche (articulation de hanche gauche) de l'utilisateur. La deuxième biellette 75 présente une première extrémité 751 reliée à la pièce d'entrée 72 par le biais du dispositif de transmission 73 et une deuxième extrémité 752 reliée à la deuxième articulation de hanche 44 du deuxième ensemble mécanique de jambe 4.

Le premier câble 78 relie la pièce d'entrée 72 à la première biellette 74, en prenant appui sur la surface circonférentielle 762 de la première poulie 76. Plus précisément, le premier câble 78 présente une première extrémité 781 attachée à la première extrémité 724 de la pièce d'entrée 72 et une deuxième extrémité 782 attachée à la première extrémité 741 de la première biellette 74.

De même, le deuxième câble 79 relie la pièce d'entrée 72 à la deuxième biellette 75, en prenant appui sur la surface circonférentielle 771 de la deuxième poulie 77. Plus précisément, le deuxième câble 79 présente une première extrémité 791 attachée à la deuxième extrémité 725 de la pièce d'entrée 72 et une deuxième extrémité 792 attachée à la première extrémité 751 de la deuxième biellette 75.

Par ailleurs, comme cela est visible sur la figure 4, chaque biellette 74, 75 peut être reliée à un ensemble mécanique de jambe 3, 4 respectif par le biais de segments articulés 84, 85. Plus précisément, le premier segment 84 comprend deux parties de segments 841 et 842 articulées par le biais d'une liaison pivot 843 autorisant une rotation des parties de segments l'une par rapport à l'autre autour d'un axe vertical. De même, le deuxième segment 85 comprend deux parties de segments 851 et 852 articulées par le biais d'une liaison pivot 853 autorisant une rotation des parties de segments l'une par rapport à l'autre autour d'un axe vertical. Les liaisons pivot 843 et 853 permettent d'accommoder les mouvements de rotation interne et externe des hanches de l'utilisateur.

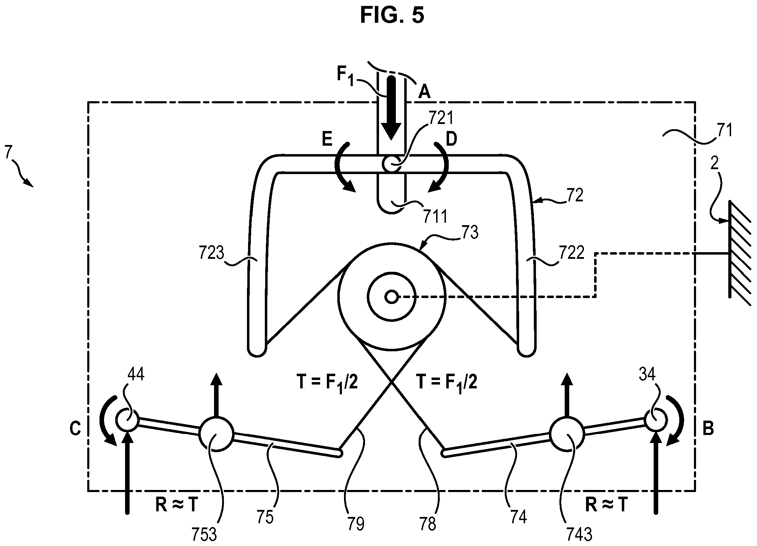

La figure 5 illustre le principe de fonctionnement du dispositif de liaison 7.

Le dispositif de liaison 7 fonctionne de la manière suivante.

Lorsque l'utilisateur est debout en appui sur ses deux jambes, en position statique, le poids de la charge 6 supportée par l'ensemble mécanique de dos 5 est transmis à la pièce d'entrée 72 (flèche A). Le poids a pour effet de mettre en tension le premier câble 78 et le deuxième câble 79. La tension exercée sur le premier câble 78 est identique à la tension exercée sur le deuxième câble 79. Cette tension est égale à la moitié de la charge.

Cela a pour conséquence que le premier câble 78 exerce sur la première biellette 74 une première force tendant à faire pivoter la première biellette 74 selon un premier sens de rotation (flèche B).

De même, le deuxième câble 79 exerce sur la deuxième biellette 75 une deuxième force tendant à faire pivoter la deuxième biellette 75 selon un deuxième sens de rotation (flèche C), opposé au premier sens de rotation.

La première biellette 74 transmet ainsi une première force au premier ensemble mécanique de jambe 3 et la deuxième biellette 75 transmet une deuxième force au deuxième ensemble mécanique de jambe 4. La première force est identique à la deuxième force, de sorte que les deux ensembles mécaniques de jambe 3 et 4 supportent une force d'appui identique, égale à la moitié de la charge.

Lorsque l'utilisateur marche, l'utilisateur s'appuie alternativement sur sa première jambe (jambe droite) et sur sa deuxième jambe (jambe gauche), ce qui provoque une légère oscillation de la pièce d'entrée 72 autour de son axe de rotation.

Au cours d'une première phase du cycle de marche, lorsque l'utilisateur appuie sur sa première jambe, la pièce d'entrée 72 a tendance à pivoter par rapport à la pièce de support 71, selon un premier sens de rotation (flèche D) autour de son axe de rotation.

La rotation de la pièce d'entrée 72 dans le premier sens a pour effet de tendre le premier câble 78 et de détendre le deuxième câble 79. Autrement dit, la tension dans le premier câble 78 devient supérieure à la tension dans le deuxième câble 79. Le premier câble 78 transmet à la première biellette 74 une force tendant à faire pivoter la première biellette 74 par rapport à la pièce de support 71 dans le premier sens de rotation (flèche B) autour de son axe de rotation 743. Cela a pour effet que la totalité de la charge s'exerçant sur l'ensemble mécanique de dos 5 est transférée par la première biellette 74 au premier ensemble mécanique de jambe 3 via la première articulation de hanche 34.

A l'inverse, la fraction de la charge transmise au deuxième ensemble mécanique de jambe 4 est fortement réduite, ce qui permet à l'utilisateur de pouvoir soulever sa deuxième jambe du sol sans exercer d'effort excessif.

Au cours d'une deuxième phase du cycle de marche, lorsque l'utilisateur appuie sur sa deuxième jambe, la pièce d'entrée 72 a tendance à pivoter par rapport à la pièce de support 71, selon un deuxième sens de rotation (flèche E) autour de son axe de rotation, le deuxième sens de rotation étant opposé au premier sens de rotation.

La rotation de la pièce d'entrée 72 dans le deuxième sens a pour effet de tendre le deuxième câble 79 et de détendre le premier câble 78. Autrement dit, la tension dans le deuxième câble 79 devient supérieure à la tension dans le premier câble 78. Le deuxième câble 79 transmet à la deuxième biellette 75 une force tendant à faire pivoter la deuxième biellette 75 par rapport à la pièce de support 71 dans le deuxième sens de rotation (flèche C) autour de son axe de rotation 753. Cela a pour effet que la totalité de la charge s'exerçant sur l'ensemble mécanique de dos 5 est transférée par la deuxième biellette 75 au deuxième ensemble mécanique de jambe 4 via la deuxième articulation de hanche 44.

A l'inverse, la fraction de la charge transmise au premier ensemble mécanique de jambe 3 est fortement réduite, ce qui permet à l'utilisateur de pouvoir soulever sa première jambe du sol sans exercer d'effort excessif.

Pendant le cycle de marche, la charge est ainsi transférée en alternance vers le premier ensemble mécanique de jambe 3 et vers le deuxième ensemble mécanique de jambe 4. Grâce au dispositif de liaison 7 proposé, la charge est toujours transférée vers l'ensemble mécanique de jambe 3 ou 4 qui est en contact avec le sol. L'autre ensemble mécanique de jambe ne supporte qu'une fraction réduite de la charge de sorte que l'utilisateur peut facilement soulever la jambe correspondante.

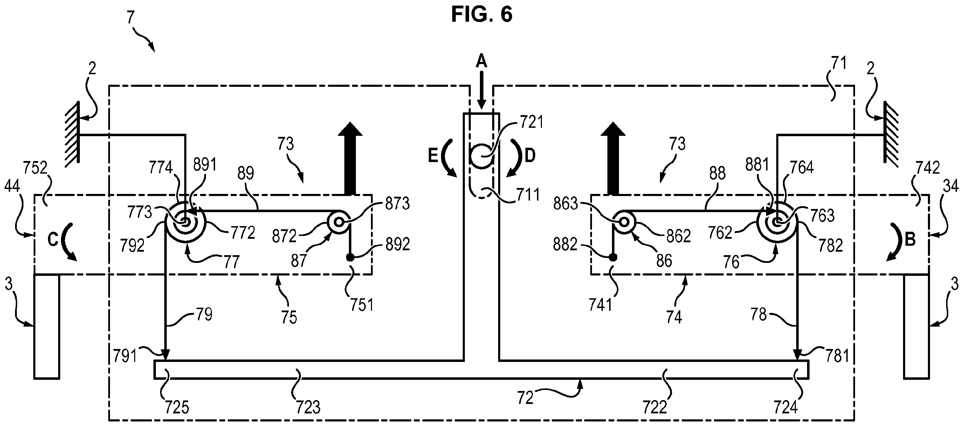

La figure 6 représente de manière schématique un dispositif de liaison 7 conforme à un deuxième mode de réalisation.

De même que dans le premier mode de réalisation, le dispositif de liaison 7 comprend un support 71, une pièce d'entrée 72, un dispositif de transmission 73, une première biellette 74 et une deuxième biellette 75.

Le support 71 est fixé sur la ceinture lombaire 2.

La pièce d'entrée 72 est reliée à l'ensemble mécanique de dos 5. La pièce d'entrée 72 est montée coulissante par rapport au support 71 par le biais d'une glissière 711 et d'un pion cylindrique 721 propre à coulisser à l'intérieur de la glissière 711 et à tourner par rapport à la glissière 711.

Dans ce deuxième mode de réalisation, la pièce d'entrée 72 présente une forme générale de T inversé avec une première branche 722 et une deuxième branche 723. La première branche 722 présente une première extrémité 724 et la deuxième branche 723 présente une deuxième extrémité 725.

Le dispositif de transmission 73 comprend une première poulie 76, une deuxième poulie 77, une troisième poulie 86, une quatrième poulie 87, un premier câble 78, un deuxième câble 79, un troisième câble 88 et un quatrième câble 89.

La première poulie 76 est montée à rotation sur le support 71 autour d'un premier axe de rotation 763. La première poulie 76 comprend une première roue 761 ayant deux surfaces circonférentielles 762 et 764 présentant des rayons différents. Le rayon de la surface circonférentielle 764 est inférieur au rayon de la surface circonférentielle 762. La surface circonférentielle 762 peut présenter une gorge pour recevoir et guider le premier câble 78. La surface circonférentielle 764 peut également présenter une gorge pour recevoir et guider le troisième câble 88.

La deuxième poulie 77 est également montée à rotation sur le support 71 autour d'un deuxième axe de rotation 773. La deuxième poulie 77 comprend une deuxième roue 771 ayant également deux surfaces circonférentielles 772 et 774. Le rayon de la surface circonférentielle 774 est inférieur au rayon de la surface circonférentielle 772. La surface circonférentielle 772 peut présenter une gorge pour recevoir et guider le deuxième câble 79. La quatrième surface circonférentielle 764 peut présenter une gorge pour recevoir et guider le quatrième câble 89.

La première biellette 74 est montée rotative par rapport au support 71. Plus précisément, la première biellette 74 est montée rotative autour d'un axe de rotation confondu avec l'axe de rotation 763 de la première poulie 76. La première biellette 74 présente une première extrémité 741 reliée à la pièce d'entrée 72 par le biais du dispositif de transmission 73 et une deuxième extrémité 742 reliée à la première articulation de hanche 34 du premier ensemble mécanique de jambe 3.

La deuxième biellette 75 est montée rotative par rapport au support 71. Plus précisément, la deuxième biellette 75 est montée rotative autour d'un axe de rotation 753 confondu avec l'axe de rotation de la deuxième poulie 77. La deuxième biellette 75 présente une première extrémité 751 reliée à la pièce d'entrée 72 par le biais du dispositif de transmission 73 et une deuxième extrémité 752 reliée à la deuxième articulation de hanche 44 du deuxième ensemble mécanique de jambe 4.

Le premier câble 78 relie la pièce d'entrée 72 à la première poulie 76 en prenant appui sur la surface circonférentielle 762 de la première poulie 76. Le troisième câble 88 relie la première poulie 76 à la première biellette 74, en prenant appui sur la surface circonférentielle 764 de la première poulie 76 et sur la surface circonférentielle 862 de la troisième poulie 86.

Plus précisément, le premier câble 78 présente une première extrémité 781 attachée à la première extrémité 724 de la pièce d'entrée 72 et une deuxième extrémité 782 attachée à la première surface circonférentielle 762 de la première poulie 76.

Le troisième câble 88 présente une première extrémité 881 attachée à la surface circonférentielle 764 de la première poulie 76 et une deuxième extrémité 882 attachée à la première extrémité 741 de la première biellette 74.

De même, le deuxième câble 79 relie la pièce d'entrée 72 à la deuxième poulie 77 en prenant appui sur la surface circonférentielle 772 de la deuxième poulie 77. Le quatrième câble 89 relie la deuxième poulie 77 à la deuxième biellette 75, en prenant appui sur la surface circonférentielle 774 de la deuxième poulie 77 et sur la surface circonférentielle 872 de la quatrième poulie 87.

Plus précisément, le deuxième câble 79 présente une première extrémité 791 attachée à la deuxième extrémité 725 de la pièce d'entrée 72 et une deuxième extrémité 792 attachée à la surface circonférentielle 772 de la deuxième poulie 77.

Le quatrième câble 89 présente une première extrémité 891 attachée à la surface circonférentielle 774 de la deuxième poulie 77 et une deuxième extrémité 892 attachée à la première extrémité 751 de la deuxième biellette 75.

Comme chaque poulie 76 (respectivement 77) présente deux surfaces circonférentielles 762 et 764 (respectivement 772 et 774) de rayons différents, le dispositif de transmission 73 permet de démultiplier la tension exercée par le premier câble 78 (respectivement le deuxième câble 88) qui est transmise au troisième câble 88 (respectivement au quatrième câble 89).

Cette configuration permet d'obtenir un dispositif de transmission 73 particulièrement compact.

En fonctionnement, la rotation de la pièce d'entrée 72 dans le premier sens de rotation (flèche D) a pour effet de tendre le premier câble 78. Le premier câble 78 transmet à la première poulie 76 une force tendant à faire pivoter la première poulie 76 par rapport à la pièce de support 71 dans le premier sens de rotation (flèche B) autour de son axe de rotation 763.

La rotation de la première poulie 76 dans le premier sens de rotation a pour effet d'enrouler le troisième câble 88 autour de la première poulie 76. Toutefois, comme le rayon de la surface circonférentielle 764 est inférieur au rayon de la surface circonférentielle 762, la tension qui est transmise au troisième câble 88 est supérieure à la tension exercée par le premier câble 78.

A l'inverse, la rotation de la pièce d'entrée 72 dans le deuxième sens de rotation (flèche E) a pour effet de tendre le deuxième câble 79. Le deuxième câble 79 transmet à la deuxième poulie 77 une force tendant à faire pivoter la deuxième poulie 77 par rapport à la pièce de support 71 dans le deuxième sens de rotation (flèche C) autour de son axe de rotation 773.

La rotation de la deuxième poulie 77 dans le deuxième sens de rotation a pour effet d'enrouler le quatrième câble 89 autour de la deuxième poulie 77. Toutefois, comme le rayon de la surface circonférentielle 774 est inférieur au rayon de la surface circonférentielle 772, la tension transmise au quatrième câble 89 est supérieure à la tension exercée par le deuxième câble 79.

De même que dans le premier mode de réalisation, pendant le cycle de marche, la charge est transférée en alternance vers le premier ensemble mécanique de jambe 3 et vers le deuxième ensemble mécanique de jambe 4. Grâce au dispositif de liaison 7 proposé, la charge est toujours transférée vers l'ensemble mécanique de jambe 3 ou 4 qui est en contact avec le sol. L'autre ensemble mécanique de jambe ne supporte qu'une fraction réduite de la charge de sorte que l'utilisateur peut facilement soulever la jambe correspondante.

## Revendications

1. Dispositif de liaison (7) pour structure d'exosquelette, comprenant :
- un support (71) destiné à être fixé sur une ceinture lombaire (2),
- une pièce d'entrée (72) montée rotative par rapport au support (71) et propre à être reliée à un ensemble mécanique de dos (5) de la structure d'exosquelette,
- un dispositif de transmission (73),
- une première biellette (74) montée rotative par rapport au support (71), la première biellette (74) présentant une première extrémité (741) reliée à la pièce d'entrée (72) par le biais du dispositif de transmission (73) et une deuxième extrémité (742) propre à être reliée à une première articulation de hanche (34) d'un premier ensemble mécanique de jambe (3) de la structure d'exosquelette, et
- une deuxième biellette (75) montée rotative par rapport au support (71), la deuxième biellette (75) présentant une première extrémité (751) reliée à la pièce d'entrée (72) par le biais du dispositif de transmission (73) et une deuxième extrémité (752) propre à être reliée à une deuxième articulation de hanche (44) d'un deuxième ensemble mécanique de jambe (4) de la structure d'exosquelette,
le dispositif de transmission (73) étant agencé de sorte que :
- lorsqu'une charge est appliquée sur la pièce d'entrée (72) tendant à faire pivoter la pièce d'entrée (72) dans un premier sens de rotation (D) par rapport au support (71), le dispositif de transmission transmet à la première biellette (74) une force tendant à faire pivoter la première biellette (74) pour transférer la charge vers le premier ensemble mécanique de jambe (3) et décharger le deuxième ensemble mécanique de jambe (5) de la structure d'exosquelette, et
- lorsqu'une charge est appliquée sur la pièce d'entrée (72) tendant à faire pivoter la pièce d'entrée (72) dans un deuxième sens de rotation (E) par rapport au support (71), opposé au premier sens de rotation, le dispositif de transmission (73) transmet à la deuxième biellette (75) une force tendant à faire pivoter la deuxième biellette (75) pour transférer la charge vers le deuxième ensemble mécanique de jambe (5) et décharger le premier ensemble mécanique de jambe (3) de la structure d'exosquelette.

2. Dispositif selon la revendication 1, dans lequel la pièce d'entrée (72) est montée coulissante par rapport au support (71).

3. Dispositif selon la revendication 2, la pièce d'entrée (72) est montée coulissante par rapport au support (71) par le biais d'une glissière (711) et d'un pion cylindrique (721) propre à coulisser à l'intérieur de la glissière (711) et à tourner par rapport à la glissière (711).

4. Dispositif selon l'une des revendications 1 à 3, dans lequel la pièce d'entrée (72) présente une première branche (722) ayant une extrémité (724) reliée à la première biellette (74) par le biais du dispositif de transmission (73) et une deuxième branche (723) ayant une extrémité (725) reliée à la deuxième biellette (74) par le biais du dispositif de transmission (73).

5. Dispositif selon l'une des revendications 1 à 3, dans lequel le dispositif de transmission (73) est un dispositif à poulies (76-77) et câbles (78-79).

6. Dispositif selon l'une des revendications 1 à 5, dans lequel le dispositif de transmission (73) comprend un premier câble (78) reliant la pièce d'entrée (72) à la première extrémité (741) de la première biellette (74), et un deuxième câble (79) reliant la pièce d'entrée (72) à la première extrémité (751) de la deuxième biellette (75).

7. Dispositif selon la revendication 6, comprenant une première poulie (76) montée à rotation sur le support (71), et dans lequel le premier câble (78) relie la pièce d'entrée (72) à la première extrémité (741) de la première biellette (74) en prenant appui sur une surface circonférentielle (761) de la première poulie (76).

8. Dispositif selon l'une des revendications 6 et 7, comprenant une deuxième poulie (77) montée à rotation sur le support (71), et dans lequel le deuxième câble (79) relie la pièce d'entrée (72) à la première extrémité (751) de la deuxième biellette (75) en prenant appui sur une surface circonférentielle (771) de la deuxième poulie (77).

9. Dispositif selon les revendications 7 et 8, dans lequel la première poulie (76) et la deuxième poulie (77) ont leurs axes de rotation confondus.

10. Dispositif selon l'une des revendications 1 à 5, dans lequel le dispositif de transmission (73) comprend une première poulie (76) montée à rotation sur le support (71), un premier câble (78) reliant la pièce d'entrée (72) à la première poulie (76), et un troisième câble (88) reliant la première poulie (77) à la première extrémité (741) de la première biellette (74).

11. Dispositif selon la revendication 10, dans lequel le premier câble (78) prend appui sur une première surface circonférentielle (762) de la première poulie (76) et le troisième câble (88) prend appui sur une troisième surface circonférentielle (764) de la première poulie (76), la troisième surface circonférentielle (764) présent un rayon inférieur au rayon de la première surface circonférentielle (762).

12. Dispositif selon l'une des revendications 10 et 11, dans lequel le dispositif de transmission (73) comprend une deuxième poulie (77) montée à rotation sur le support (71), un deuxième câble (79) reliant la pièce d'entrée (72) à la deuxième poulie (77), et un quatrième câble (89) reliant la deuxième poulie (77) à la première extrémité (751) de la deuxième biellette (75).

13. Dispositif selon la revendication 12, dans lequel le deuxième câble (88) prend appui sur une deuxième surface circonférentielle (772) de la deuxième poulie (77) et le quatrième câble (89) prend appui sur une quatrième surface circonférentielle (774) de la deuxième poulie (77), la quatrième surface circonférentielle (774) présent un rayon inférieur au rayon de la deuxième surface circonférentielle (772).

14. Dispositif selon l'une des revendications 7 à 13, dans lequel la première poulie (76) et/ou la deuxième poulie (77) a un axe de rotation (763, 773) confondu avec l'axe de rotation (743, 753) de la première biellette (74) et/ou de la deuxième biellette (75).

15. Structure d'exosquelette (1) comprenant :
- une ceinture lombaire (2) propre à entourer la taille d'un utilisateur,
- un premier ensemble mécanique de jambe (3) propre à s'étendre le long d'une première jambe de l'utilisateur,
- un deuxième ensemble mécanique de jambe (4) propre à s'étendre le long d'une deuxième jambe de l'utilisateur,
- un ensemble mécanique de dos (5) propre à s'étendre le long du dos de l'utilisateur pour le portage d'une charge (6),
- un dispositif de liaison (7) selon l'une des revendications 1 à 14, dont la pièce d'entrée (72) est reliée à la structure de dos (5), le support (71) est fixé à la ceinture lombaire (2), la première biellette (74) a sa deuxième extrémité (742) reliée au premier ensemble mécanique de jambe (3) via une première articulation de hanche (34) et la deuxième biellette (75) a sa deuxième extrémité (752) reliée au deuxième ensemble mécanique de jambe (4) via une deuxième articulation de hanche (44).

## Patentansprüche

1. Verbindungsvorrichtung (7) für Exoskelettstruktur, umfassend:
- einen Halter (71), der zur Befestigung an einem Lumbalgürtel (2) bestimmt ist,
- ein Eingangsteil (72), das in Bezug auf den Halter (71) rotatorisch angebracht ist und imstande ist, mit einer mechanischen Rückenanordnung (5) der Exoskelettstruktur verbunden zu sein,
- eine Übertragungsvorrichtung (73),
- einen ersten Schwingarm (74), der in Bezug auf den Halter (71) rotatorisch angebracht ist, wobei der erste Schwingarm (74) ein erstes Ende (741) aufweist, das mit dem Eingangsteil (72) über die Übertragungsvorrichtung (73) verbunden ist, und ein zweites Ende (742), das imstande ist, mit einem ersten Hüftgelenk (34) einer ersten mechanischen Beinanordnung (3) der Exoskelettstruktur verbunden zu sein, und
- einen zweiten Schwingarm (75), der in Bezug auf den Halter (71) rotatorisch angebracht ist, wobei der zweite Schwingarm (75) ein erstes Ende (751) aufweist, das mit dem Eingangsteil (72) über die Übertragungsvorrichtung (73) verbunden ist, und ein zweites Ende (752), das imstande ist, mit einem zweiten Hüftgelenk (44) einer zweiten mechanischen Beinanordnung (4) der Exoskelettstruktur verbunden zu sein,
wobei die Übertragungsvorrichtung (73) derart eingerichtet ist, dass:
- wenn auf das Eingangsteil (72) eine Last ausgeübt wird, wodurch bewirkt wird, dass das Eingangsteil (72) in einer ersten Rotationsrichtung (D) in Bezug auf den Halter (71) geschwenkt wird, die Übertragungsvorrichtung an den ersten Schwingarm (74) eine Kraft überträgt, die bewirkt, dass der erste Schwingarm (74) geschwenkt wird, um die Last an die erste mechanischen Beinanordnung (3) zu übertragen und die zweite mechanische Beinanordnung (5) der Exoskelettstruktur zu entlasten, und
- wenn auf das Eingangsteil (72) eine Last ausgeübt wird, wodurch bewirkt wird, dass das Eingangsteil (72) in einer zweiten Rotationsrichtung (E) in Bezug auf den Halter (71) entgegengesetzt zur ersten Rotationsrichtung geschwenkt wird, die Übertragungsvorrichtung (73) an den zweiten Schwingarm (75) eine Kraft überträgt, die bewirkt, dass der zweite Schwingarm (75) geschwenkt wird, um die Last an die zweite mechanische Beinanordnung (5) zu übertragen und die erste mechanische Beinanordnung (3) der Exoskelettstruktur zu entlasten.

2. Vorrichtung nach Anspruch 1, wobei das Eingangsteil (72) in Bezug auf den Halter (71) gleitend angebracht ist.

3. Vorrichtung nach Anspruch 2, wobei das Eingangsteil (72) in Bezug auf den Halter (71) über eine Schiene (711) und einen zylindrischen Stift (721), der imstande ist, in der Schiene (711) zu gleiten und in Bezug auf die Schiene (711) zu drehen, gleitend angebracht ist.

4. Vorrichtung nach einem der Ansprüche 1 bis 3, wobei das Eingangsteil (72) einen ersten Schenkel (722) mit einem Ende (724) aufweist, das mit dem ersten Schwingarm (74) über die Übertragungsvorrichtung (73) verbunden ist, und einen zweiten Schenkel (723) mit einem Ende (725), das mit dem zweiten Schwingarm (74) über die Übertragungsvorrichtung (73) verbunden ist.

5. Vorrichtung nach einem der Ansprüche 1 bis 3, wobei die Übertragungsvorrichtung (73) eine Vorrichtung mit Rollen (76-77) und Kabeln (78-79) ist.

6. Vorrichtung nach einem der Ansprüche 1 bis 5, wobei die Übertragungsvorrichtung (73) ein erstes Kabel (78) umfasst, das das Eingangsteil (72) mit dem ersten Ende (741) des ersten Schwingarms (74) verbindet, und ein zweites Kabel (79), das das Eingangsteil (72) mit dem ersten Ende (751) des zweiten Schwingarms (75) verbindet.

7. Vorrichtung nach Anspruch 6, umfassend eine erste Rolle (76), die rotatorisch auf dem Halter (71) angebracht ist und wobei das erste Kabel (78) das Eingangsteil (72) mit dem ersten Ende (741) des ersten Schwingarms (74) verbindet, indem es sich auf einer Umfangsfläche (761) der ersten Rolle (76) abstützt.

8. Vorrichtung nach einem der Ansprüche 6 und 7, umfassend eine zweite Rolle (77), die rotatorisch auf dem Halter (71) angebracht ist und wobei das zweite Kabel (79) das Eingangsteil (72) mit dem ersten Ende (751) des zweiten Schwingarms (75) verbindet, indem es sich auf einer Umfangsfläche (771) der zweiten Rolle (77) abstützt.

9. Vorrichtung nach den Ansprüchen 7 und 8, wobei die Rotationsachsen der ersten Rolle (76) und der zweiten Rolle (77) zusammenfallen.

10. Vorrichtung nach einem der Ansprüche 1 bis 5, wobei die Übertragungsvorrichtung (73) eine erste Rolle (76) umfasst, die rotatorisch auf dem Halter (71) angebracht ist, wobei ein erstes Kabel (78) das Eingangsteil (72) mit der ersten Rolle (76) verbindet und ein drittes Kabel (88) die erste Rolle (77) mit dem ersten Ende (741) des ersten Schwingarms (74) verbindet.

11. Vorrichtung nach Anspruch 10, wobei sich das erste Kabel (78) auf einer ersten Umfangsfläche (762) der ersten Rolle (76) abstützt und sich das dritte Kabel (88) auf einer dritten Umfangsfläche (764) der ersten Rolle (76) abstützt, wobei die dritte Umfangsfläche (764) einen Radius aufweist, der kleiner als der Radius der ersten Umfangsfläche (762) ist.

12. Vorrichtung nach einem der Ansprüche 10 und 11, wobei die Übertragungsvorrichtung (73) eine zweite Rolle (77) umfasst, die rotatorisch auf dem Halter (71) angebracht ist, wobei ein zweites Kabel (79) das Eingangsteil (72) mit der zweiten Rolle (77) verbindet und ein viertes Kabel (89) die zweite Rolle (77) mit dem ersten Ende (751) des zweiten Schwingarms (75) verbindet.

13. Vorrichtung nach Anspruch 12, wobei sich das zweite Kabel (88) auf einer zweiten Umfangsfläche (772) der zweiten Rolle (77) abstützt und sich das vierte Kabel (89) auf einer vierten Umfangsfläche (774) der zweiten Rolle (77) abstützt, wobei die vierte Umfangsfläche (774) einen Radius aufweist, der kleiner als der Radius der zweiten Umfangsfläche (772) ist.

14. Vorrichtung nach einem der Ansprüche 7 bis 13, wobei die erste Rolle (76) und/oder die zweite Rolle (77) eine Rotationsachse (763, 773) haben, die mit der Rotationsachse (743, 753) des ersten Schwingarms (74) und/oder des zweiten Schwingarms (75) zusammenfällt.

15. Exoskelettstruktur (1), umfassend:
- einen Lumbalgürtel (2), der imstande ist, die Taille eines Benutzers zu umgeben,
- eine erste mechanische Beinanordnung (3), die imstande ist, sich entlang eines ersten Beins des Benutzers zu erstrecken,
- eine zweite mechanische Beinanordnung (4), die imstande ist, sich entlang eines zweiten Beins des Benutzers zu erstrecken,
- eine mechanische Rückenanordnung (5), die imstande ist, sich entlang des Rückens des Benutzers zwecks Tragens einer Last (6) zu erstrecken,
- eine Verbindungsvorrichtung (7) nach einem der Ansprüche 1 bis 14, deren Eingangsteil (72) mit der Rückenstruktur (5) verbunden ist, der Halter (71) am Lumbalgürtel (2) befestigt ist, der erste Schwingarm (74) sein zweites Ende (742) mit der ersten mechanischen Beinanordnung (3) über ein erstes Hüftgelenk (34) verbunden hat und der zweite Schwingarm (75) sein zweites Ende (752) mit der zweiten mechanischen Beinanordnung (4) über ein zweites Hüftgelenk (44) verbunden hat.

## Claims

1. A linking device (7) for an exoskeleton structure comprising:
- a support (71) intended to be attached to a lumbar belt (2),
- an input part (72) mounted in rotation with respect to the support (71) and capable of being connected to a mechanical back assembly (5) of the exoskeleton structure,
- a transmission device (73),
- a first connecting link (74) mounted in rotation with respect to the support (71), the first connecting link (74) having a first end (741) connected to the input part (72) by means of the transmission device (73) and a second end (742) capable of being connected to a first hip joint (34) of a first mechanical leg assembly (3) of the exoskeleton structure, and
- a second connecting link (75) mounted in rotation with respect to the support (71), the second connecting link (75) having a first end (751) connected to the input part (72) by means of the transmission device (73) and a second end (752) capable of being connected to a second hip joint (44) of a second mechanical leg assembly (4) of the exoskeleton structure,
the transmission device (73) being arranged so that:
- when a load is applied to the input part (72) tending to pivot the input part (72) in a first direction of rotation (D) with respect to the support (71), the transmission device transmits to the first connecting link (74) a force tending to pivot the first connecting link (74) to transfer the load to the first mechanical leg assembly (3) and unload the second mechanical leg assembly (5) of the exoskeleton structure, and
- when a load is applied to the input part (72) tending to pivot the input part (72) in a second direction of rotation (E) with respect to the support (71), opposite to the first direction of rotation, the transmission device (73) transmits to the second connecting link (75) a force tending to pivot the second connecting link (75) to transfer the load to the second mechanical leg assembly (5) and unload the first mechanical leg assembly (93) of the exoskeleton structure.

2. The device according to claim 1, wherein the input part (72) is mounted sliding with respect to the support (71).

3. The device according to claim 2, wherein the input part (72) is mounted sliding with respect to the support (71) by means of a slider (711) and of a cylindrical pin (721) capable of sliding inside the slider (711) and turning with respect to the slider (711) .

4. The device according to one of claims 1 to 3, wherein the input part (72) has a first branch (722) having one end (724) connected to the first connecting link (74) by means of the transmission device (73) and a second branch (723) having one end (725) connected to the second connecting link (74) by means of the transmission device (73).

5. The device according to one of claims 1 to 3, wherein the transmission device (73) is a pulley (76-77) and cable (78-79) device.

6. The device according to one of claims 1 to 5, wherein the transmission device (73) comprises a first cable (78) connecting the input part (72) to the first end (741) of the first connecting link (74) and a second cable (79) connecting the input part (72) to the first end (751) of the second connecting link (75).

7. The device according to claim 6, comprising a first pulley (76) mounted in rotation on the support (71) and wherein the first cable (78) connects the input part (72) to the first end (741) of the first connecting link (74) while supporting itself on a circumferential surface (761) of the first pulley (76).

8. The device according to one of claims 6 and 7, comprising a second pulley (77) mounted in rotation on the support (71), and wherein the second cable (79) connects the input part (72) to the first end (751) of the second connecting link (75) while supporting itself on a circumferential surface (771) of the second pulley (77) .

9. The device according to claim 7 and 8, wherein the first pulley (76) and the second pulley (77) have coincident axes of rotation.

10. The device according to one of claims 1 to 5, wherein the transmission device (73) comprises a first pulley (76) mounted in rotation on the support (71), a first cable (78) connecting the input part (72) to the first pulley (76) and a third cable (88) connecting the first pulley (77) to the first end (741) of the first connecting link (74).

11. The device according to claim 10, wherein the first cable (78) supports itself on a first circumferential surface (762) of the first pulley (76) and the third cable (88) supports itself on a third circumferential surface (764) of the first pulley (76), the third circumferential surface (764) having a smaller radius than the radius of the first circumferential surface (762).

12. The device according to one of claims 10 and 11, wherein the transmission device (73) comprises a second pulley (77) mounted in rotation on the support (71), a second cable (79) connecting the input part (72) to the second pulley (77) and a fourth cable (89) connecting the second pulley (77) to the first end (751) of the second connecting rod (75).

13. The device according to claim 12, wherein the second cable (88) supports itself on a second circumferential surface (772) of the second pulley (77) and the fourth cable (89) supports itself on a fourth circumferential surface (774) of the second pulley (77), the fourth circumferential surface (774) having a smaller radius than the radius of the second circumferential surface (772).

14. The device according to claims 7 to 13, wherein the first pulley (76) and/or the second pulley (77) has an axis of rotation (763, 773) coincident with the axis of rotation (743, 753) of the first connecting link (74) and/or of the second connecting link (75).

15. An exoskeleton structure (1) comprising:
- a lumbar belt (2) capable of surrounding the waist of a user,
- a first mechanical leg assembly (3) capable of extending along a first leg of the user,
- a second mechanical leg assembly (4) capable of extending along a second leg of the user,
- a mechanical back assembly (5) capable of extending along the back of the user for carrying a load (6),
- a linking device (7) according to one of claims 1 to 14, of which the input part (72) is connected to the back structure (5), the support (71) is attached to the lumbar belt (2), the first connecting link (74) has its second end (742) connected to the first mechanical leg assembly (3) via a first hip joint (34) and the second connecting link (75) has its second end (752) connected to the second mechanical leg assembly (4) via a second hip joint (44).
